# EUROPÄISCHE PATENTSCHRIFT

(11) **EP 3 475 553 B1**
(45) Veröffentlichungstag und Bekanntmachung des Hinweises auf die Patenterteilung: **03.06.2020**
(21) Anmeldenummer: 17732883.8
(22) Anmeldetag: 22.06.2017
(51) Int. Cl.: F02K 9/52, F02K 9/95

(54) **ZÜNDGERÄT SOWIE ZÜNDVERFAHREN**
IGNITION DEVICE AND IGNITION METHOD
APPAREIL D'ALLUMAGE ET PROCÉDÉ D'ALLUMAGE

(30) Priorität: 24.06.2016 DE 102016111669; 06.07.2016 DE 102016112436; 08.07.2016 DE 102016112619
(43) Veröffentlichungstag der Anmeldung: 01.05.2019
(73) Patentinhaber: Bauer, Christian, 81667 München (DE)
(72) Erfinder: Bauer, Christian, 81667 München (DE)
(74) Vertreter: Kastel, Stefan
(86) Internationale Anmeldenummer: PCT/EP2017/065471
(87) Internationale Veröffentlichungsnummer: WO 2017/220754

(56) Entgegenhaltungen:
- GB-A- 2 256 677
- US-A- 5 109 669
- US-B1- 8 966 879

## Beschreibung

Die Erfindung betrifft ein Zündgerät, ein damit versehenes Triebwerk sowie ein Zündverfahren. Ferner betrifft die Erfindung ein Luftfahrzeug und ein Raumfahrzeug mit einem solchen Triebwerk.

Aus dem Stand der Technik ist bekannt, dass in durch unterexpandierte Überschall-Freistrahlen zu Schwingungen angeregten Kavitäten starke thermische Effekte beobachtet werden können. Als treibender Faktor werden die natürlichen Instabilitäten innerhalb des Freistrahls - die "Barrel Shocks" - genannt, die Stoßwellen im Resonator induzieren. Darauf basierend gibt es zahlreiche Entwürfe, die sich diese Effekte zur Zündung von Gasgemischen, zumeist zur Anwendung in Raketentriebwerken, zunutze machen.

Eine gute Zusammenstellung über die wesentlichen Entwicklungen von Triebwerkzündgeräten ist im Übersichtsartikel von RAMAN, G.; SRINIVASAN, K. "The powered resonance tube: From Hartmann's discovery to current active flow control applications." aus Progress in Aerospace Sciences, n. 45, 2009 dargestellt, der hiermit durch Verweis in die Offenbarung einbezogen wird.

So offenbart US 6 966 769 B2 einen gasdynamischen Resonanzzünder mit einem Korpus, der einen ersten Einlass mit einer überschallschnellen Düse aufweist. Ein Auslass von dem Korpus enthält eine Öffnung vorbestimmter Größe, um einen gewünschten Druck in dem Korpus zu erhalten. Eine Apertur in dem Korpus gegenüber des ersten Einlasses sorgt für einen Zugang zu einem keramischen Resonatorhohlraum. Eine keramische Ausströmscheibe ist an einem zweiten Ende des Resonatorhohlraums in Eingriff. Eine Endkappe beinhaltet einen Zwischenraum, der zum Aufnehmen eines Hochtemperatur-Sauerstoff-Stroms aus dem Resonatorhohlraum durch die Ausströmscheibe angepasst ist. Eine Absaugöffnung ist mit dem Zwischenraum für den Hochtemperatur-Sauerstoff verbunden, der in eine Mischkammer strömt, welche einen Pilotbrennstoff zum Entzünden einer Anzündflamme einführt.

CN 1 01 852 146 A offenbart einen Wasserstoff-Sauerstoff Motorkopf für Raketenmotoren. Der Motor wird mittels eines Resonanzheizeffektes gezündet, der entsteht, wenn Motortreibstoff in ein Resonanzrohr gestrahlt wird. Eine pneumatische Resonanzzündtechnik mit einem einfachen Aufbau und hoher Zuverlässigkeit wird angegeben. Der Zünder ist "organisch" in den kleinen Motorkopf integriert, so dass der Resonanzzünder kleiner ausgestaltet ist.

US 3 994 232 A offenbart einen luftbetriebenen Zünder für zeitkritische Anwendungen.

CN 1 01 852 147 A und CN 1 01 699 053 A offenbaren einen gasdynamischen Resonanzzünder für Raketenmotoren. Der Mischbecher des Resonanzzünders ist zwischen der Einspritzdüse und der Zündkammer angeordnet und mit zwei Lochreichen versehen. Wasserstoff und Sauerstoff strömen von der Zünderdüse durch den Mischbecher in die Zündkammer.

CN 1 01 852 148 A offenbart einen Resonanzzünder für Sauerstoff/Kerosinverbrennung.

US 8 966 879 B1 offenbart einen akustischen Resonanzzünder, der eine Injektionsdüse umfasst, die einen schallschnellen oder unterexpandierten überschallschnellen Fluidstrom erzeugt.

GB 2 256 677 A offenbart einen Ejektor-Ramjet, der im Unterschied zu einem Ramjet auch bei Nullgeschwindigkeit Schub erzeugen kann.

US 5 109 669 A offenbart ein selbstabschaltendes Zündungssystem für einen Wasserstoff-Sauerstoff betriebenen Raketenmotor. Der Wasserstoff wird mittels eines Resonators erhitzt und zur Zündung mit Sauerstoff in eine Brennkammer injiziert. Nach der Zündung steigt der Kammerdruck an, sodass der Wasserstoff nicht mehr erhitzt wird und das Zündungssystem abschaltet.

Den aus dem Stand der Technik bekannten Konstruktionen ist gemein, dass sie konvergente Düsen verwenden, um einen unterexpandierten Überschallfreistrahl zu erzeugen. Neue Untersuchungen zeigen jedoch, dass auch starke Scherschichten Resonator-Kavitäten zu Schwingungen anregen können, wodurch ebenfalls starke thermische Effekte reproduziert werden können, ohne jedoch die typische starke Abhängigkeit von Randbedingungen aufzuweisen. Diese neuen Erkenntnisse fließen in die hier vorgestellten Ideen ein, um insbesondere die Robustheit von Resonanzzündern zu verbessern.

Es ist daher die Aufgabe der Erfindung, verbesserte Maßnahmen anzugeben, die insbesondere eine verzögerungsärmere und/oder zuverlässigere Zündung von Gemischen ermöglicht, wodurch vorzugsweise insgesamt die Robustheit von Zündern gesteigert werden kann.

Die Aufgabe wird durch den Gegenstand der unabhängigen Ansprüche gelöst. Vorteilhafte Weiterbildungen der Erfindung sind Gegenstand der abhängigen Ansprüche.

Die Erfindung schafft ein Zündgerät, insbesondere ein Triebwerkzündgerät, mehr insbesondere ein Raketentriebwerkzündgerät, zum Entzünden eines Gemisches, insbesondere eines Gemisches für ein Triebwerk, beispielsweise ein Raketentriebwerk, mit einer Energieumwandlungsvorrichtung, die ausgebildet ist, Fluidstromenergie wenigstens eines Fluidstromes in Wärme umzuwandeln, um das Gemisch zu entzünden, und die eine Zündkammer, insbesondere eine Injektionskammer, für den wenigstens einen Fluidstrom umfasst, und mit einer Fluidstrominjektionsvorrichtung, die zum Injizieren einer Mehrzahl von Fluidströmen in die Zündkammer, insbesondere die Injektionskammer, derart ausgebildet ist, dass ein erster Fluidstrom in die Zündkammer, insbesondere die Injektionskammer, mit einer höheren Fluidströmungsgeschwindigkeit als ein zweiter Fluidstrom injizierbar ist, wobei die Fluidstrominjektionsvorrichtung wenigstens eine Injektionsdüse für den ersten Fluidstrom aufweist, wobei die Injektionsdüse einen Injektionsdüsenquerschnitt umfasst, der sich in Fluidströmungsrichtung betrachtet bis auf einen Minimalquerschnitt verjüngt und anschließend auf einen Austrittsquerschnitt wieder erweitert.

Es ist bevorzugt, dass die Fluidstrominjektionsvorrichtung derart ausgebildet ist, dass der erste Fluidstrom mit einer mindestens schallschnellen, vorzugsweise überschallschnellen, ersten Fluidströmungsgeschwindigkeit injizierbar ist.

Es ist bevorzugt, dass die Fluidstrominjektionsvorrichtung derart ausgebildet ist, dass der erste Fluidstrom mit einer höchstens schallschnellen, insbesondere etwa schallschnellen, und/oder unterschallschnellen zweiten Fluidströmungsgeschwindigkeit injizierbar ist.

Es ist bevorzugt, dass die Fluidstrominjektionsvorrichtung derart ausgebildet ist, dass der zweite Fluidstrom mit einer höchstens schallschnellen, insbesondere etwa schallschnellen, und/oder unterschallschnellen zweiten Fluidströmungsgeschwindigkeit injizierbar ist.

Es ist bevorzugt, dass die Fluidstrominjektionsvorrichtung derart ausgebildet ist, dass der zweite Fluidstrom mit einer mindestens schallschnellen, vorzugsweise überschallschnellen, ersten Fluidströmungsgeschwindigkeit injizierbar ist.

Es ist bevorzugt, dass die Fluidstrominjektionsvorrichtung derart ausgebildet ist, dass der erste Fluidstrom und der zweite Fluidstrom relativ zueinander koaxial injizierbar sind.

Es ist bevorzugt, dass der erste Fluidstrom den zweiten Fluidstrom in dessen Umfangsrichtung betrachtet wenigstens teilweise, insbesondere vollständig, umgibt.

Es ist bevorzugt, dass der Injektionsdüsenquerschnitt sich in Fluidströmungsrichtung betrachtet bis auf einen Minimalquerschnitt stetig verjüngt und anschließend auf einen Austrittsquerschnitt wiederstetig erweitert.

Es ist bevorzugt, dass die Fluidinjektionsvorrichtung wenigstens eine Injektionsdüse mit einem Injektionsdüsenquerschnitt umfasst, der sich in Fluidströmungsrichtung betrachtet bis auf einen minimalen Austrittsquerschnitt, insbesondere stetig, verjüngt.

Es ist bevorzugt, dass eine erste Injektionsdüse eine kreisförmige, Querschnittsform aufweist.

Es ist bevorzugt, dass eine zweite Injektionsdüse eine ringförmige, insbesondere eine kreisringförmige Querschnittsform aufweist.

Es ist bevorzugt, dass die Energieumwandlungsvorrichtung in Axialrichtung von der Fluidinjektionsvorrichtung beabstandet ist.

Es ist bevorzugt, dass die Energieumwandlungsvorrichtung eine zentrale Achse aufweist, die mit einer zentralen Achse der Fluidinjektionsvorrichtung zusammenfällt.

Es ist bevorzugt, dass die Energieumwandlungsvorrichtung eine Druckschwankungserzeugungseinrichtung zum Erzeugen von Druckschwankungen aus dem wenigstens einen Fluidstrom aufweist.

Es ist bevorzugt, dass die Druckschwankungserzeugungsvorrichtung innerhalb der Injektionskammer angeordnet ist, so dass die Druckschwankungserzeugungsvorrichtung mit dem wenigstens einen Fluidstrom beaufschlagbar ist.

Es ist bevorzugt, dass die Druckschwankungserzeugungsvorrichtung einen Druckschwankungserzeugungshohlraum mit einer Druckschwankungserzeugungsöffnung umfasst, wobei die Druckschwankungserzeugungsöffnung der Fluidinjektionsvorrichtung derart zugewandt ist, dass der Druckschwankungserzeugungshohlraum mit dem wenigstens einen Fluidstrom beaufschlagbar ist.

Es ist bevorzugt, dass der Druckschwankungserzeugungshohlraum ausgebildet ist, die Druckschwankungen auf das Ende zu fokussieren, das der Druckschwankungserzeugungsöffnung entfernt liegt.

Es ist bevorzugt, dass der Druckschwankungserzeugungshohlraum im Wesentlichen konisch ausgebildet ist.

Es ist bevorzugt, dass die Energieumwandlungsvorrichtung eine Wärmetransportverringerungseinrichtung umfasst, die ausgebildet ist, einen Transport der von der Energieumwandlungsvorrichtung, insbesondere der Druckschwankungserzeugungsvorrichtung, erzeugten Wärme weg von der Energieumwandlungsvorrichtung, insbesondere weg von der Druckschwankungserzeugungsvorrichtung zu verringern.

Es ist bevorzugt, dass die Wärmetransportverringerungseinrichtung ein Wärmetransportverringerungsmittel umfasst, das die Energieumwandlungsvorrichtung, insbesondere die Druckschwankungserzeugungsvorrichtung, in Umfangsrichtung wenigstens teilweise, insbesondere vollständig, umgibt.

Es ist bevorzugt, dass die Wärmetransportverringerungseinrichtung einen Wärmetransportunterdrückungsbereich aufweist, der zwischen dem Wärmetransportverringerungsmittel und der Energieumwandlungsvorrichtung, insbesondere der Druckschwankungserzeugungsvorrichtung, vorgesehen ist.

Es ist bevorzugt, dass die Wärmetransportverringerungseinrichtung derart ausgebildet ist, dass eine Konvektion der Wärme weg von der Energieumwandlungsvorrichtung, insbesondere weg von der Druckschwankungserzeugungsvorrichtung, unterdrückt oder verringert ist.

Vorzugsweise umfasst das Zündgerät eine Auslassvorrichtung, durch die der wenigstens eine Fluidstrom auslassbar ist.

Vorzugsweise umfasst das Zündgerät eine Druckfestlegungsvorrichtung, durch die ein Zündkammerdruck der Zündkammer festlegbar ist.

Die Erfindung schafft ferner ein Triebwerk, insbesondere Raketentriebwerk, für ein Luftfahrzeug, insbesondere ein Flugzeug, oder ein Raumfahrzeug, insbesondere einen Satelliten, mit einer Brennkammer und einem bevorzugten Triebwerkzündgerät, wobei das Treibwerkzündgerät derart mit der Brennkammer verbunden ist, dass ein in der Brennkammer vorhandenes Gemisch durch das Triebwerkzündgerät entzündbar ist.

Die Erfindung schafft ferner ein Luftfahrzeug, insbesondere ein Flugzeug, oder ein Raumfahrzeug, insbesondere einen Satelliten, mit einem bevorzugten Triebwerk.

Die Erfindung schafft ferner ein Zündverfahren zum Entzünden eines in einer Brennkammer eines Triebwerks vorhandenen Gemisches durch Injizieren einer Mehrzahl von Fluidströmen in eine Zündkammer, insbesondere eine Injektionskammer, wobei ein erster Fluidstrom mit einer höheren Fluidströmungsgeschwindigkeit als ein zweiter Fluidstrom injiziert wird, indem der erste Fluidstrom mittels wenigstens einer Injektionsdüse der Fluidstrominjektionsvorrichtung injiziert wird, wobei die Injektionsdüse einen Injektionsdüsenquerschnitt umfasst, der sich in Fluidströmungsrichtung betrachtet bis auf einen Minimalquerschnitt verjüngt und anschließend auf einen Austrittsquerschnitt wieder erweitert.

Es ist bevorzugt, dass der erste Fluidstrom mit einer mindestens schallschnellen, vorzugsweise überschallschnellen, ersten Fluidströmungsgeschwindigkeit injiziert wird.

Es ist bevorzugt, dass der zweite Fluidstrom mit einer höchstens schallschnellen, insbesondere etwa schallschnellen, und/oder unterschallschnellen zweiten Fluidströmungsgeschwindigkeit injiziert wird.

Es ist bevorzugt, dass der erste Fluidstrom und der zweite Fluidstrom relativ zueinander koaxial injiziert werden.

Es ist bevorzugt, dass der erste Fluidstrom den zweiten Fluidstrom in dessen Umfangsrichtung betrachtet wenigstens teilweise, insbesondere vollständig, umgebend injiziert wird.

Es ist bevorzugt, dass eine innerhalb der Injektionskammer angeordnete Druckschwankungserzeugungsvorrichtung mit dem wenigstens einen Fluidstrom beaufschlagt wird.

Es ist bevorzugt, dass ein Druckschwankungserzeugungshohlraum durch eine Druckschwankungserzeugungsöffnung mit dem wenigstens einen Fluidstrom beaufschlagt wird.

Es ist bevorzugt, dass die Druckschwankungen auf das Ende fokussiert werden, das der Druckschwankungserzeugungsöffnung entfernt liegt.

Es ist bevorzugt, dass die von der Energieumwandlungsvorrichtung erzeugte Wärme an deren geschlossenem Ende konzentriert wird.

Es ist bevorzugt, dass eine Konvektion der Wärme weg von der Energieumwandlungsvorrichtung, insbesondere weg von der Druckschwankungserzeugungsvorrichtung, verringert oder verhindert wird.

Bei dem hier vorgestellten Zündgerät, das auch als gasdynamischer Resonanzzünder bezeichnet werden kann, werden fluidmechanische Effekte genutzt, um ein (Gas-)Gemisch ohne bewegliche Teile und ohne äußere Energiezufuhr passiv zu zünden. Voraussetzung dafür ist insbesondere, dass eine Komponente in kompressibler Form mit ausreichendem Druck vorliegt.

Die Medien werden von einer Fluidinjektionsvorrichtung beispielsweise über eine spezielle Düse entspannt und in einen Hohlraum/Resonator geleitet und dadurch zu starken Schwingungen angeregt. Durch irreversible Effekte (beispielsweise Reibung, Stoßwellen) wird die im Fluid gespeicherte Energie in Form von Wärme freigesetzt, was üblicherweise zu einer kontinuierlichen Temperaturerhöhung innerhalb des Resonators bis zur Selbstzündung des Gemisches führt. Gewissermaßen wird die Fluidenergie von einer Energieumwandlungsvorrichtung in Wärme umgewandelt.

Der hier vorgestellte Zünder basiert auf einem Düsenkonzept, das verglichen mit bisherigen Resonanzzündern einige Vorteile bietet.

Aufgrund des einfachen und robusten Aufbaus ist ein gasdynamischer Zünder insbesondere für Satellitenantriebe interessant, die in der Regel mehr als 10 Jahre wartungsfrei und zuverlässig funktionieren sollen. Allerdings können auch die meisten anderen technischen Verbrennungsprozesse profitieren, bei denen Fluide mit ausreichend Druck zur Verfügung stehen, wie etwa bei Luftfahrzeugen.

Der erfindungsgemäße Zünder umfasst einen Koaxial-Injektor, dem Resonator, einem Gehäuse und einer konvergenten Auslassblende. Abstandshalter dienen zur Justierung des Düsen-Resonator-Abstands. Das Gehäuse kann zugleich als Interface zu einer stromab gelegenen Brennkammer dienen, die gezündet werden soll.

Der Durchmesser der Auslassblende ist vorzugsweise so gewählt, dass sich innerhalb des Zünders der gewünschte Druck p_{cold} einstellt, so dass die Blende kritisch (also mit Schallgeschwindigkeit) durchströmt ist. Der Einwirkung brennkammerseitiger beziehungsweise auslassseitiger Druckschwankungen auf den Zünder kann dadurch verringert oder gar verhindert werden.

Der bevorzugt als Ringspalt ausgebildete Austritt des Koaxial-Injektors kann im Unterschied zu anderen Konstruktionen als auf den Druck p_{cold} angepasste konvergent-divergente Düse gestaltet sein, um insbesondere den zugeführten Oxidatormassenstrom auf Überschallgeschwindigkeit zu beschleunigen. Durch die Anpassung auf den Stromab-Druck können die typischen "Barrel-Shocks" vermieden. Zudem ist keine strikt sequenzielle Zuführung der beiden Treibstoffe mehr nötig; stattdessen können beide Fluide simultan zugeführt werden. Der insbesondere zentral angeordnete Brennstoffinjektor ist vorzugsweise konvergent ausgeführt. Die Injektionsdurchmesser sind vorzugsweise so gewählt, dass der benötigte Brennstoffmassenstrom bei kritischer Durchströmung ebenfalls auf p_{cold} entspannt wird.

Durch die Entspannung auf bevorzugt unterschiedliche Machzahlen können zwischen beiden Medien starke Schereffekte entstehen, die inhärent instabil sein können. Dadurch kann eine Wirbelablösung verursacht werden. Diese Wirbel treffen stromab auf den Resonator, der ein Beispiel für eine Druckschwankungserzeugungsvorrichtung ist. Im Resonator können die Wirbel innerhalb der Resonator-Kavität starke Stöße bzw. Druckschwankungen induzieren, die das eingeschlossene Gas wiederholt komprimieren und entspannen. Durch irreversible Effekte kann das Fluid in der Nähe des geschlossenen Endes des Resonators erhitzt werden. Um eine möglichst schnelle Aufheizung zu erreichen werden, beispielsweise durch ein geeignetes Resonatordesign, die Wärmeverluste zur Umgebung minimiert. Die konische Form der Kavität kann die Stöße zum geschlossenen Ende hin fokussieren, um dort die Wärmeproduktion zu erhöhen. Gleichzeitig kann der Resonator möglichst dünnwandig ausgeführt sein. Vorzugsweise ist der Resonator am sich aufheizenden Ende durch eine Ummantelung vor starken konvektiven Wärmeverlusten zur Umgebung hin geschützt.

Nach einer kurzen Aufheizphase entzündet sich üblicherweise das im Resonator vorgemischte Fluid. Die Verbrennung kann sich in den gesamten Bereich stromab des Injektors ausbreiten. Das resultierende heiße Gas verlässt den Zünder durch die Auslassblende und steht damit stromab zur Zündung einer Brennkammer eines Triebwerks zur Verfügung. Da keine Anforderungen an die stromab gelegene Brennkammer gestellt werden, ist der Zünder bei ausreichender thermischer Leistung vielseitig einsetzbar.

Das Mischungsverhältnis O/F (engl. Oxidator/Fuel) innerhalb des Zünders ist vorzugsweise so gewählt, dass die Verbrennungstemperatur mit den verwendeten Materialien aus denen das Triebwerkzündgerät hergestellt ist kompatibel bleibt. Beispielsweise wird Sauerstoff als Oxidator verwendet, während als Brennstoff Methan zum Einsatz kommt. Bei geeigneter Wahl der Düsen-Durchmesser können jedoch nahezu beliebige Treibstoffkombinationen mit dem Triebwerkzünder verwendet und gezündet werden.

Um die komplexen Strukturen des Triebwerkzündgerätes zu realisieren, kann als Fertigungsverfahren beispielsweise Micro Selective Laser Melting verwendet werden. Dies erlaubt eine leichte, integrale Bauweise einzelnen Komponenten.

Die Konfiguration des Triebwerkszündgerätes wird unter anderem durch thermische Leistung, Treibstoffkombination, Mischungsverhältnis und Zünderdruck beeinflusst. Treibstoffkombination und nötige thermische Leistung sind meist durch das Gesamtsystem vorgegeben. Bei einem Zünder für ein Methan-Sauerstoff Raketentriebwerks wird etwa dieselbe Kombination auch für den Zünder verwendet. Das Mischungsverhältnis kann hingegen vergleichsweise frei gewählt werden. Dabei sollten jedoch verschiedene Randbedingungen berücksichtigt werden. Hier wurde ein bevorzugtes Mischungsverhältnis (O/F) von 30 gewählt.

Das Gemisch befindet sich damit innerhalb des zündfähigen Bereichs, in der Nähe der mageren Zündgrenze. In diesem Bereich betragen die idealen, adiabaten Flammtemperaturen etwa 1600 K und ändern sich nur geringfügig mit dem Mischungsverhältnis. Eine lokale Änderung des Mischungsverhältnisses wirkt sich also nur gering auf die Verbrennungstemperaturen aus und kann so lokaler Überhitzung vorbeugen. Obwohl diese in der Regel im Idealbereich erreichbaren Temperaturen bereits die Einsatztemperaturen konventioneller Hochtemperatur-Materialien übersteigen können, sind die real auftretenden Temperaturen meist deutlich geringer. Dies erlaubt es beispielsweise, korrosionsbeständige Kobalt-, Chrom- oder Nickel-Basislegierungen einzusetzen.

Ein überstöchiometrischer Betrieb des Zünders ist bevorzugt, da Raketentriebwerke immer brennstoffreich betrieben werden; jedoch nicht notwendig. Ein Triebwerkszündgerät, der beispielsweise mit Sauerstoffüberschuss betrieben wird, kann entsprechend nicht nur thermische Leistung für den Zündvorgang bereitstellen, sondern kann auch heiße Sauerstoffradikale erzeugen, die mit der brennstoffreichen Hauptströmung bereitwillig reagieren. Dadurch kann der Zündvorgang erheblich vereinfacht und/oder beschleunigt werden. Dies kann insbesondere bei zeitkritischen Anwendungen vorteilhaft sein.

Zudem lassen sich mit Sauerstoff als Resonanzgas gegebenenfalls höhere Resonator-Temperaturen erzielen als mit Methan. So ist bekannt, dass die Erwärmung bei der Verwendung von Luft als Resonanzgas etwa 200 K höher ist im Vergleich zu Methan. Da Luft, Stickstoff und Sauerstoff nahezu identische Resonanzeigenschaften aufweisen, ist das Zündverhalten des Triebwerkszündgeräts im Betrieb mit Luft in der Regel direkt auf die zu erwartende Erwärmung beim Betrieb mit Sauerstoff übertragbar.

Soll hingegen die Kombination Wasserstoff/Sauerstoff zum Einsatz kommen, ist üblicherweise ein brennstoffreicher Betrieb des Triebwerkszündgeräts zu bevorzugen; unter anderem da Wasserstoff bessere Resonanzeigenschaften und damit einen besseren Wirkungsgrad als Sauerstoff aufweisen kann.

Der (Triebwerks-)Zünderdruck des (Triebwerks-)Zündgeräts im "kalten" Zustand, also bei einströmenden Medien (Oxidator/Brennstoff) vor der eigentlichen Zündung übersteigt bevorzugt das kritische Druckverhältnis von etwa 2 zwischen Triebwerkszünderdruck und Umgebungsdruck. Damit kann am Auslass eine Machzahl von 1 erreicht werden. Der Zünder kann somit konvektiv vollständig von der Umgebung entkoppelt werden. Es sollte beachtet werden, dass eine Erhöhung des Zünderdruckes mit höheren Einström-Drücken einhergeht. Für die Anwendung bei Raumfahrzeugen, beispielsweise in Form eines Oberstufen- oder Satellitenzünders ist dies jedoch aufgrund der Expansion in das Vakuum meist unkritisch.

Ausgehend von der gewünschten Treibstoffkombination, dem gewünschten Mischungsverhältnis und der gewünschten thermischen Leistung können die nötigen Treibstoffmassenströme dimensioniert werden. Mit dem geforderten Triebwerkszünderdruck kann unter Annahme von Ma = 1 der Austrittsquerschnitt berechnet werden.

Eine Scherschicht kann beispielsweise erzeugt werden, indem eine axiale Nadel einen Teil einer konvergent-divergenten Düse blockiert. Dadurch wird ein Rezirkulationsgebiet hinter dieser Nadel geschaffen.

Um eine ausreichend starke Scherschicht zu erzeugen wird hier vorgeschlagen, einen Fluidstrom, vorzugsweise den Oxidator, mit wesentlich höherer Geschwindigkeit als den Brennstoff zu injizieren. Das langsamere Fluid ist dann im Zentrum angeordnet und von dem äußeren Fluidstrom umgeben.

Ausführungsbeispiele des Zündgerätes werden mit Bezug auf die beigefügten Zeichnungen näher erläutert. Darin zeigt:
- Fig. 1: ein Ausführungsbeispiel eines Luftfahrzeugs;
- Fig. 2: einen Schnitt durch ein Ausführungsbeispiel eines Triebwerks;
- Fig. 3: ein Ausführungsbeispiel eines Zündgerätes;
- Fig. 4: einen Schnitt entlang der Linie IV-IV aus Fig. 3;
- Fig. 5: eine Detailansicht des Bereichs E;
- Fig. 6: ein Ausführungsbeispiel eines Raumfahrzeugs;
- Fig. 7: ein Ausführungsbeispiel eines Zündgerätes;
- Fig. 8: einen Schnitt entlang der Linie VIII-VIII aus Fig. 7; und
- Fig. 9: eine Detailansicht des Bereichs J.

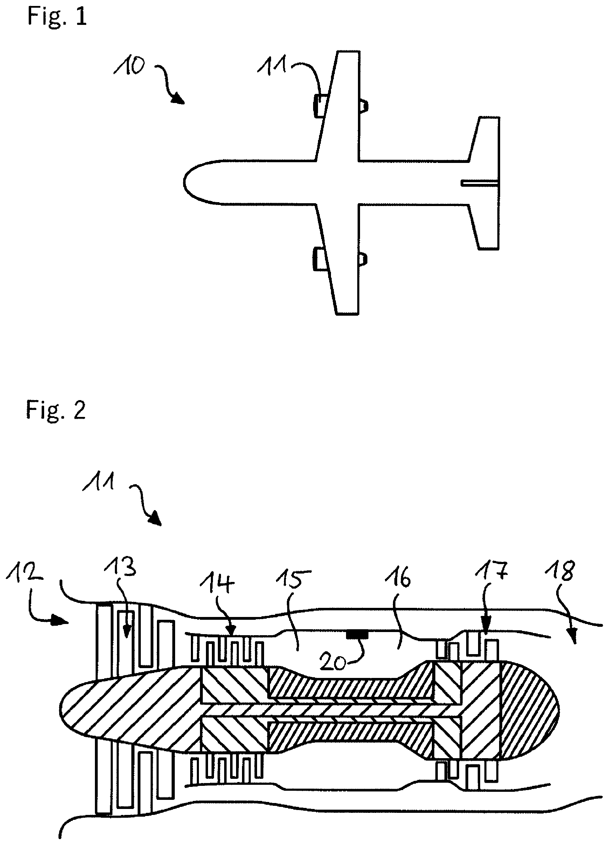

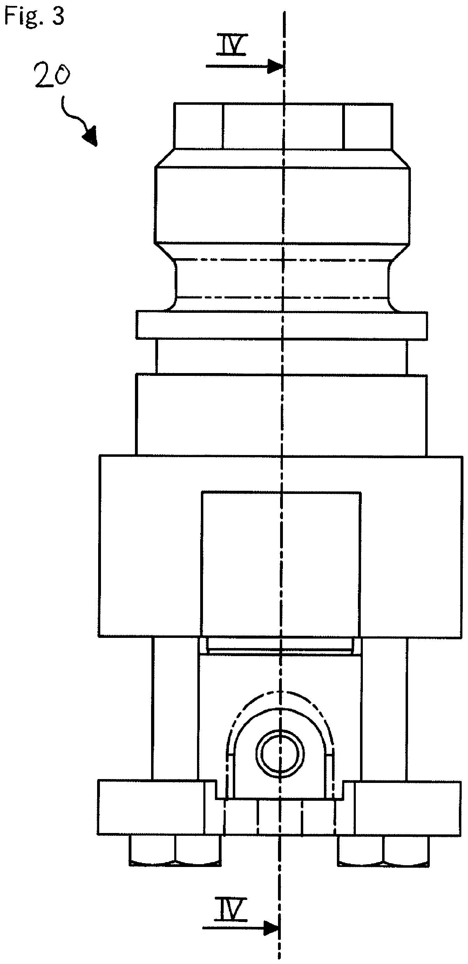

Es wird zunächst auf Fig. 1 bis Fig. 5 Bezug genommen, die ein Ausführungsbeispiel eines Luftfahrzeugs 10 mit einem Triebwerk 11 zeigen. Das Triebwerk 11 ist im Wesentlichen zylinderförmig ausgebildet und erstreckt sich in einer axialen Richtung und umfasst einen Einlauf 12, in dem ein Fan 13 angeordnet ist. Das Triebwerk 11 umfasst ferner einen Verdichter 14 der stromab des Fans 13 angeordnet ist. Weiter stromab von dem Verdichter 14 schließt sich eine Brennkammer 15 an. In die Brennkammer 15 wird ein Gemisch 16 eingespritzt, das einen Oxidator (beispielsweise Luft-Sauerstoff) und einen Brennstoff (beispielsweise Kerosin) enthält. Stromab anschließend ist eine Turbine 17 vorgesehen, die den Fan 13 und den Verdichter 14 antreiben kann. Anschließend an die Turbine 17 ist eine Schubdüse 18 vorgesehen, die einen Abgasstrahl ausstößt.

Das Triebwerk 11 umfasst ein Ausführungsbeispiel eines Triebwerkzündgerätes 20. Das Triebwerkzündgerät 20 ist an die Brennkammer 15 derart angeschlossen, dass das Gemisch 16 mittels des Triebwerkzündgerätes 20 entzündet werden kann.

Das Triebwerkzündgerät ist beispielsweise aus einer Chrom-Kobalt-Legierung oder einer Nickelbasislegierung, wie insbesondere Inconel®, hergestellt. Das Triebwerkzündgerät 20 ist im Wesentlichen rotationssymmetrisch ausgebildet und erstreckt sich in einer axialen Richtung. Das Triebwerkzündgerät 20 umfasst ein Gehäuse 21.

An das Gehäuse 21 ist eine Fluidstrominjektionsvorrichtung 22 angeschlossen. Die Fluidstrominjektionsvorrichtung 22 weist einen Eintrittsabschnitt 30, an dem eine Mehrzahl von Fluidströmen eintreten kann, und einen Austrittsabschnitt 31 auf. Der Austrittsabschnitt 31 ist so an das Gehäuse 21 angeschlossen, dass die Mehrzahl von Fluidströmen innerhalb des Gehäuses 21 austreten kann.

Der Eintrittsabschnitt 30 enthält insbesondere einen ersten Fluidversorgungsanschluss 32, beispielsweise als äußeren Fluidversorgungsanschluss 32, und/oder einen zweiten Fluidversorgungsanschluss 33, beispielsweise als inneren Fluidversorgungsanschluss 33. Durch den äußeren Fluidversorgungsanschluss 32 kann der Oxidator zugeführt werden, während durch den inneren Fluidversorgungsanschluss 33 der Brennstoff zugeführt werden kann.

Der Austrittsabschnitt 31 kann eine erste Injektionsdüse 36, beispielsweise als äußere Injektionsdüse 36, und/oder eine zweite Injektionsdüse 37, beispielsweise als innere Injektionsdüse 37, aufweisen. Die äußere Injektionsdüse 36 ist über eine äußere Fluidversorgungsleitung 34 mit dem äußeren Fluidversorgungsanschluss 32 fluidverbunden. Ebenso kann die innere Injektionsdüse 37 über eine innere Fluidversorgungsleitung 35 mit dem inneren Fluidversorgungsanschluss 33 fluidverbunden sein. Somit können ein erster Fluidstrom 38, beispielsweise eine äußerer Fluidstrom 38, und/oder ein zweiter Fluidstrom 39, beispielsweise ein innerer Fluidstrom 39, von dem Eintrittsabschnitt 30 zu dem Austrittsabschnitt 31 strömen und an dem Austrittsabschnitt 31 ausströmen.

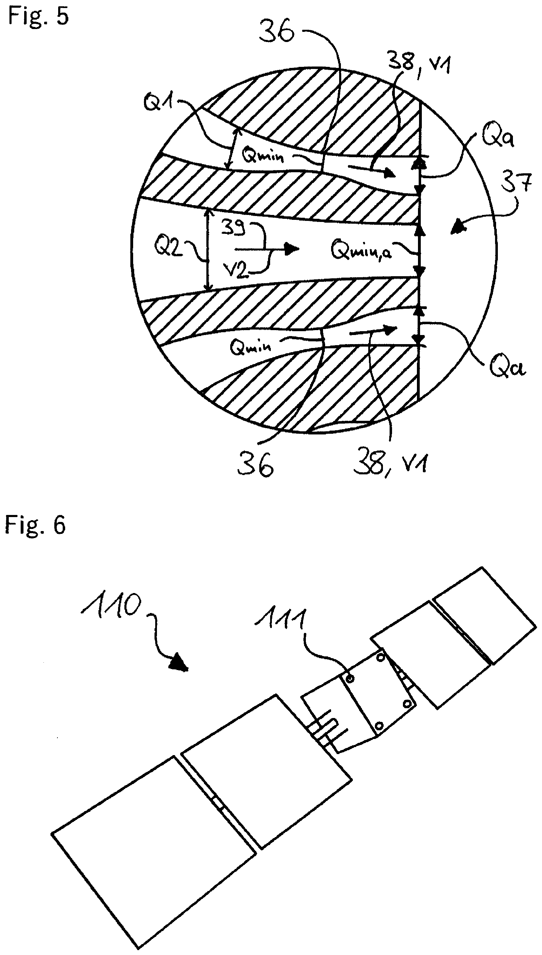

Eine Detailansicht des Austrittsabschnitts 31 ist insbesondere in Fig. 5 dargestellt. Die äußere Injektionsdüse 36 ist rotationssymmetrisch, insbesondere im Wesentlichen kreisringförmig, ausgebildet. Die äußere Injektionsdüse 36 weist einen äußeren Injektionsdüsenquerschnitt Q1 auf. Der äußere Injektionsdüsenquerschnitt Q1 verjüngt sich zunächst in Fluidströmungsrichtung des äußeren Fluidstromes 38 betrachtet bis auf einen Minimalquerschnitt Qmin. An dem Minimalquerschnitt Qmin erreicht die äußere Fluidströmungsgeschwindigkeit v1 die Schallgeschwindigkeit und der Minimalquerschnitt Qmin ist kritisch durchströmt. Anschließend erweitert sich der äußere Injektionsdüsenquerschnitt Q1 bis auf einen Austrittsquerschnitt Qa. Somit wird die äußere Fluidströmungsgeschwindigkeit v1 auf Überschallgeschwindigkeit gesteigert.

Die innere Injektionsdüse 37 ist rotationssymmetrisch, insbesondere im Wesentlichen kreisförmig, ausgebildet. Die innere Injektionsdüse 37 weist einen inneren Injektionsdüsenquerschnitt Q2 auf. Der innere Injektionsdüsenquerschnitt Q2 verjüngt sich in Fluidströmungsrichtung des inneren Fluidstromes 39 betrachtet bis auf einen minimalen Austrittsquerschnitt Qmin,a. An dem minimalen Austrittsquerschnitt Qmin,a erreicht die innere Fluidströmungsgeschwindigkeit v2 höchstens Schallgeschwindigkeit. Der äußere Fluidstrom 38 weist daher eine deutlich größere Fluidströmungsgeschwindigkeit als der innere Fluidstrom 39 auf; es gilt v1 > v2. Es sollte beachtet werden, dass auch die umgekehrte Konfiguration nützlich sein kann.

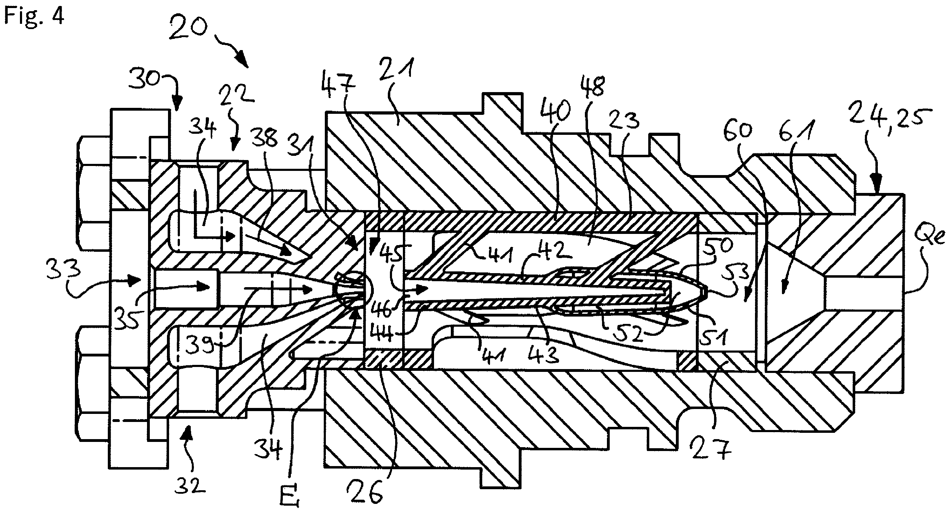

Es wird insbesondere auf Fig. 4 Bezug genommen. Das Triebwerkzündgerät 20 enthält ferner eine Energieumwandlungsvorrichtung 23. Die Energieumwandlungsvorrichtung 23 ist ausgebildet, Fluidstromenergie des äußeren Fluidstromes 38 und des inneren Fluidstromes 39 in Wärme umzuwandeln. Die Energieumwandlungsvorrichtung 23 ist rotationssymmetrisch, insbesondere im Wesentlichen zylinderförmig ausgebildet, und kann mittels eines fluidinjektionsseitigen Abstandhalters 26 von der Fluidinjektionsvorrichtung 22 beabstandet sein.

Die Energieumwandlungsvorrichtung 23 umfasst eine Druckschwankungserzeugungsvorrichtung 42 sowie eine Injektionskammer 47. Die Druckschwankungserzeugungsvorrichtung 46 grenzt an die Injektionskammer 47. Die Energieumwandlungsvorrichtung 23 kann eine im wesentlichen zylinderförmige Stützhülse 40 umfassen, um die Druckschwankungserzeugungsvorrichtung 42 an dem Gehäuse 21 abzustützen. Die Druckschwankungserzeugungsvorrichtung 42 wird insbesondere von einer Mehrzahl von Stützstreben 41 an der Stützhülse 40 gestützt.

Die Druckschwankungserzeugungsvorrichtung 42 ist relativ zu der Fluidinjektionsvorrichtung 22 derart angeordnet, dass die Druckschwankungserzeugungsvorrichtung 42 mit dem äußeren Fluidstrom 38 und/oder dem inneren Fluidstrom 39 beaufschlagt werden kann. Somit umfasst die Injektionskammer 47 den in axialer Richtung zwischen der Fluidinjektionsvorrichtung 22 und der Druckschwankungserzeugungsvorrichtung 42 befindlichen Raum.

Die Druckschwankungserzeugungsvorrichtung 42 weist einen Rohrabschnitt 43 auf, der einen Druckschwankungserzeugungshohlraum 45 begrenzt. Der Druckschwankungserzeugungshohlraum 45 ist von einer Mantelkammer 48, beispielsweise mittels des Rohrabschnitts 43, getrennt. Die Mantelkammer 48 schließt sich an die Injektionskammer 47 an und umgibt insbesondere den Druckschwankungserzeugungshohlraum 45. Die Mantelkammer 48 ist in radialer Richtung nach außen durch die Stützhülse 40 begrenzt, während die Mehrzahl von Stützstreben 41 in der Mantelkammer 48 verläuft.

Der Rohrabschnitt 43 ist vorzugsweise als ein Rohrkonusabschnitt 44 ausgebildet, um die erzeugten Druckschwankungen zu dem geschlossenen Ende der Druckschwankungserzeugungsvorrichtung 42 zu fokussieren. Der Rohrabschnitt 43 ist insbesondere zu der Fluidinjektionsvorrichtung 22 hin geöffnet. Demnach umfasst die Druckschwankungserzeugungsvorrichtung 42 eine Druckschwankungserzeugungsöffnung 43. Die Druckschwankungserzeugungsöffnung 46 grenzt an die Injektionskammer 47 nicht jedoch an die Mantelkammer 48.

Die Energieumwandlungsvorrichtung 23 kann ferner eine Wärmetransportverringerungseinrichtung 50 umfassen. Die Wärmetransportverringerungseinrichtung 50 ist an dem geschlossenen Ende der Druckschwankungserzeugungsvorrichtung 42 zum Verringern des Transports von Wärme vorgesehen. Die Wärmetransportverringerungseinrichtung 50 umfasst ein Wärmetransportverringerungsmittel 51, das im Wesentlichen zylinderförmig entsprechend der Außenkontur der Druckschwankungserzeugungsvorrichtung 42 mit einer Stromlinienform als eine Art Kappe ausgebildet ist.

Die Wärmetransportverringerungseinrichtung 50 weist ferner einen Wärmetransportunterdrückungsbereich 52 auf, der zwischen der Druckschwankungserzeugungsvorrichtung 42 und dem Wärmetransportverringerungsmittel 51 vorgesehen ist. Der Wärmetransportunterdrückungsbereich 52 ist so dimensioniert, dass Wärmetransport, insbesondere Wärmetransport mittels Konvektion, deutlich erschwert oder ganz unmöglich ist.

Ferner weist die Wärmetransportverringerungseinrichtung 50 eine Fertigungsöffnung 53 auf. Die Fertigungsöffnung 53 ist an dem auslassseitigen Ende der Wärmetransportverringerungseinrichtung 50 vorgesehen und dient dazu, von der Fertigung überschüssiges Material aus dem Wärmetransportunterdrückungsbereich 52 zu entfernen. Im Betrieb wird die in dem Gemisch 16 entstehende Wärme durch das Wärmetransportverringerungsmittel 51 in der Druckschwankungserzeugungsvorrichtung 42, insbesondere in dem Druckschwankungserzeugungshohlraum 45, eingesperrt.

Das Triebwerkzündgerät 20 umfasst ferner eine Auslassvorrichtung 24, um das aus dem äußeren Fluidstrom 38 und dem inneren Fluidstrom 39 gebildete Gemisch 16 in die Umgebung, beispielsweise die Brennkammer 15, auszulassen. Die Auslassvorrichtung 24 kann als Druckfestlegungsvorrichtung 25 ausgebildet sein, mit der der Triebwerkzünderdruck festgelegt wird. Die Auslassvorrichtung 24 umfasst eine sich verjüngende Ejektionsdüse 61, die sich stromab an eine Zündkammer 60 anschließt. Die Zündkammer 60 umfasst die Injektionskammer 47, die Mantelkammer 48 und den Druckschwankungserzeugungshohlraum 45. Die Ejektionsdüse 61 verjüngt sich bis auf einen Ejektionsquerschnitt Qe, an dem das ausströmende Gemisch 16 bevorzugt Schallgeschwindigkeit erreichen.

Der Zündvorgang läuft nun wie folgt ab. Der Oxidator und/oder der Brennstoff werden über den Eintrittsabschnitt 30 in das Triebwerkzündgerät 20 eingespeist. Der äußere Fluidstrom 38 und der innere Fluidstrom 39 strömen durch die äußere Injektionsdüse 36 und die innere Injektionsdüse 37 in die Injektionskammer 47. Der äußere Fluidstrom 38 wird mit der äußeren Fluidströmungsgeschwindigkeit v1 injiziert, die größer als die innere Fluidströmungsgeschwindigkeit v2 ist. Es entsteht das Gemisch 16, dessen Strömung sich zwischen der Druckschwankungserzeugungsvorrichtung 42 und der Mantelkammer 48 aufteilt. Das Beaufschlagen der Druckschwankungserzeugungsvorrichtung 42 erzeugt Druckschwankungen, die zu dem geschlossenen Ende hin fokussiert werden. Durch innere Reibung, Wechselwirkung mit den Komponenten des Triebwerkzündgerätes 20 und andere irreversible fluidmechanische Effekte entsteht dadurch Wärme und zwar hauptsächlich an dem geschlossenen Ende der Druckschwankungserzeugungsvorrichtung 42. Die Wärme wird durch die Wärmetransportverringerungseinrichtung 50 für die Zündung konzentriert, indem durch das Wärmetransportverringerungsmittel 51 ein Wärmeverlust verringert wird und/oder die Konvektion in dem Wärmetransportunterdrückungsbereich 52 unterdrückt oder zumindest verringert ist. Dadurch steigt die Temperatur in der Zündkammer 60, insbesondere vor allem in dem Druckschwankungserzeugungshohlraum 45, so weit an, dass das in der Zündkammer 60 befindliche Gemisch 16 beginnend an dem geschossenen Ende der Druckschwankungserzeugungsvorrichtung 42 zündet. Die Verbrennung breitet sich davon ausgehend in den gesamten Druckschwankungserzeugungshohlraum 42 aus und verläuft weiter über die Injektionskammer 47 und die Mantelkammer 48 zu der Ejektionsdüse 61. Das entzündete Gemisch 16 strömt über die Ejektionsdüse 61 mit Schallgeschwindigkeit in die Brennkammer 15, so dass auch das dort vorhandene Gemisch 16 ebenfalls zündet. Die Gemische müssen nicht identisch sein.

Nachfolgend wird ein Ausführungsbeispiel eines Triebwerkzündgerätes 20 nur insoweit beschrieben, als es sich von dem bisher beschriebenen Ausführungsbeispiel unterscheidet.

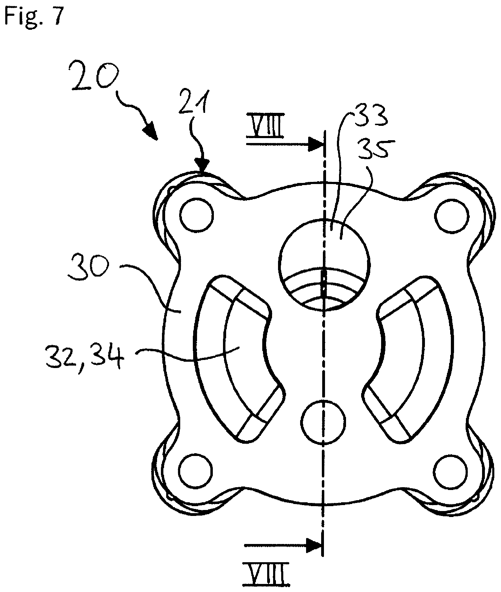

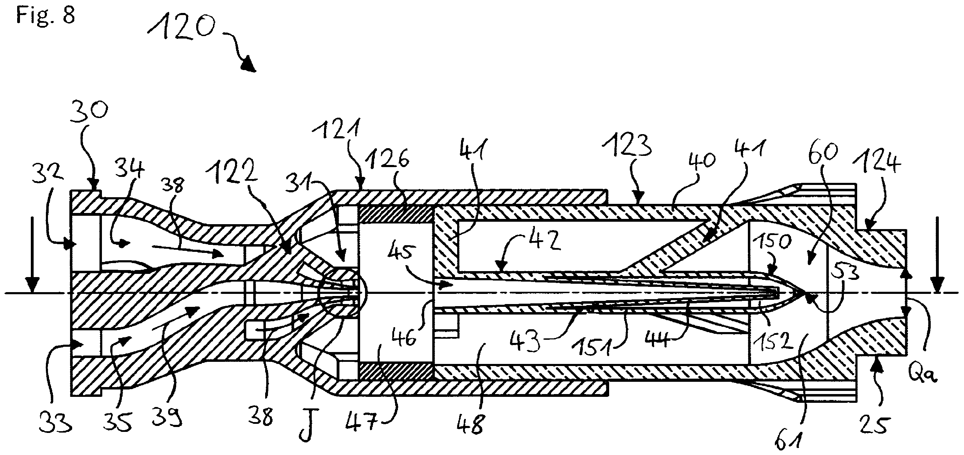

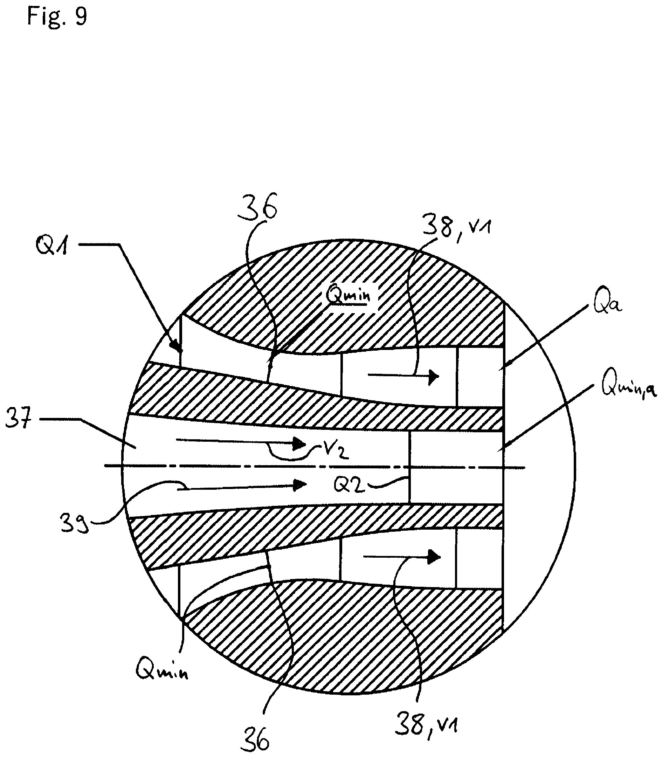

Es wird auf Fig. 6 bis Fig. 9 Bezug genommen, die ein Ausführungsbeispiel eines Raumfahrzeugs, beispielsweise einen Satelliten 110, mit einem Raketentriebwerk 111 zeigen. Das Raketentriebwerk 111 wird beispielsweise mit Sauerstoff als Oxidator und Methan als Brennstoff betrieben und umfasst ein Ausführungsbeispiel eines Triebwerkzündgerätes 120. Das Triebwerkzündgerät 120 ist an die Brennkammer des Raketentriebwerks 111 angeschlossen.

Das Triebwerkzündgerät 120 ist im Wesentlichen rotationssymmetrisch ausgebildet und erstreckt sich in einer axialen Richtung. Das Triebwerkzündgerät 120 umfasst ein Gehäuse 121 und eine Fluidstrominjektionsvorrichtung 122. Im Unterschied zu dem vorherigen Ausführungsbeispiel sind bei diesem Ausführungsbeispiel das Gehäuse 121 und die Fluidstrominjektionsvorrichtung 122 als ein einzelnes materialeinheitliches Element integral ausgebildet. Das Triebwerkzündgerät 120 enthält ferner eine Energieumwandlungsvorrichtung 123 und eine Auslassvorrichtung 124. Die Energieumwandlungsvorrichtung 123 und die Auslassvorrichtung 124 sind im Unterschied zu dem vorigen Beispiel als ein einzelnes materialeinheitliches Element integral ausgebildet. Die beiden Komponenten werden in einander eingesteckt und durch einen fluidinjektionsseitigen Abstandhalter 126 voneinander beabstandet.

Die Energieumwandlungsvorrichtung 123 kann ferner eine Wärmetransportverringerungseinrichtung 150 umfassen. Die Wärmetransportverringerungseinrichtung 150 erstreckt sich in Umfangsrichtung über die gesamte Länge der Druckschwankungserzeugungsvorrichtung 42. Die Wärmetransportverringerungseinrichtung 150 umfasst ein Wärmetransportverringerungsmittel 151, das im Wesentlichen zylinderförmig mit einer sich zuspitzenden Stromlinienform ausgebildet ist. Das Wärmetransportverringerungsmittel 151 erstreckt sich über die gesamte Länge der Druckschwankungserzeugungsvorrichtung 42 und umgibt diese.

Die Wärmetransportverringerungseinrichtung 150 weist ferner einen Wärmetransportunterdrückungsbereich 152 auf, der zwischen der Druckschwankungserzeugungsvorrichtung 42 und dem Wärmetransportverringerungsmittel 151 vorgesehen ist. Der Wärmetransportunterdrückungsbereich 152 nimmt im Volumen in Fluidströmungsrichtung betrachtet stetig zu. Im Betrieb wird die an der Druckschwankungserzeugungsvorrichtung 42 entstehende Wärme durch das Wärmetransportverringerungsmittel 151 gewissermaßen eingesperrt und kann durch die in dem Wärmetransportunterdrückungsbereich 152 verringerte Konvektion an dem geschlossenen Ende der Druckschwankungserzeugungsvorrichtung 42 konzentriert werden.

### Bezugszeichenliste:

- 10: Luftfahrzeug (Flugzeug)
- 11: Triebwerk
- 12: Einlauf
- 13: Fan
- 14: Verdichter
- 15: Brennkammer
- 16: Gemisch
- 17: Turbine
- 18: Schubdüse

- 20: Triebwerkzündgerät
- 21: Gehäuse
- 22: Fluidstrominjektionsvorrichtung
- 23: Energieumwandlungsvorrichtung
- 24: Auslassvorrichtung
- 25: Druckfestlegungsvorrichtung
- 26: fluidinjektionsseitiger Abstandhalter
- 27: auslassseitiger Abstandhalter

- 30: Eintrittsabschnitt
- 31: Austrittsabschnitt
- 32: äußerer Fluidversorgungsanschluss
- 33: innerer Fluidversorgungsanschluss
- 34: äußere Fluidversorgungsleitung
- 35: innere Fluidversorgungsleitung
- 36: äußere Injektionsdüse (erste Injektionsdüse)
- 37: innere Injektionsdüse (zweite Injektionsdüse)
- 38: äußerer Fluidstrom (erster Fluidstrom)
- 39: innerer Fluidstrom (zweiter Fluidstrom)
- 40: Stützhülse
- 41: Stützstrebe
- 42: Druckschwankungserzeugungsvorrichtung
- 43: Rohrabschnitt
- 44: Rohrkonusabschnitt
- 45: Druckschwankungserzeugungshohlraum
- 46: Druckschwankungserzeugungsöffnung
- 47: Injektionskammer
- 48: Mantelkammer
- 50: Wärmetransportverringerungseinrichtung
- 51: Wärmetransportverringerungsmittel
- 52: Wärmetransportunterdrückungsbereich
- 53: Fertigungsöffnung

- 60: Zündkammer
- 61: Ejektionsdüse

- 110: Satellit (Raumfahrzeug)
- 111: Raketentriebwerk

- 120: Triebwerkzündgerät
- 121: Gehäuse
- 122: Fluidstrominjektionsvorrichtung
- 123: Energieumwandlungsvorrichtung
- 124: Auslassvorrichtung

- 126: fluidinjektionsseitiger Abstandhalter

- 150: Wärmetransportverringerungseinrichtung
- 151: Wärmetransportverringerungsmittel
- 152: Wärmetransportunterdrückungsbereich

- Q1: äußerer Injektionsdüsenquerschnitt (erster Injektionsdüsenquerschnitt)
- Q2: innerer Injektionsdüsenquerschnitt (zweiter Injektionsdüsenquerschnitt)
- Qmin: Minimalquerschnitt
- Qa: Austrittsquerschnitt
- Qe: Ejektionsquerschnitt
- Qmin,a: minimalen Austrittsquerschnitt
- v1: äußere Fluidströmungsgeschwindigkeit (erste Fluidströmungsgeschwindigkeit)
- v2: innere Fluidströmungsgeschwindigkeit (zweite Fluidströmungsgeschwindigkeit)

## Patentansprüche

1. Zündgerät (20, 120) zum Entzünden eines Gemisches (16)
mit einer Energieumwandlungsvorrichtung (23, 123), die ausgebildet ist, Fluidstromenergie wenigstens eines Fluidstromes (38, 39) in Wärme umzuwandeln, um das Gemisch (16) zu entzünden, und die eine Zündkammer (60) für den wenigstens einen Fluidstrom (38, 39) umfasst, und
mit einer Fluidstrominjektionsvorrichtung (22, 122), die zum Injizieren einer Mehrzahl von Fluidströmen (38, 39) in die Zündkammer (60) derart ausgebildet ist, dass ein erster Fluidstrom (38) in die Zündkammer (60) mit einer höheren Fluidströmungsgeschwindigkeit als ein zweiter Fluidstrom (39) injizierbar ist
**dadurch gekennzeichnet, dass** die Fluidstrominjektionsvorrichtung (22, 122) wenigstens eine Injektionsdüse (36) für den ersten Fluidstrom (38) aufweist, wobei die Injektionsdüse (36) einen Injektionsdüsenquerschnitt (Q1) umfasst, der sich in Fluidströmungsrichtung betrachtet bis auf einen Minimalquerschnitt (Qmin) verjüngt und anschließend auf einen Austrittsquerschnitt (Qa) wieder erweitert.

2. Zündgerät (20, 120) nach Anspruch 1, **dadurch gekennzeichnet, dass** die Fluidstrominjektionsvorrichtung (22, 122) derart ausgebildet ist, dass der erste Fluidstrom (38) mit einer überschallschnellen ersten Fluidströmungsgeschwindigkeit (v1) injizierbar ist.

3. Zündgerät (20, 120) nach einem der voranstehenden Ansprüche, **dadurch gekennzeichnet, dass** die Fluidstrominjektionsvorrichtung (22, 122) derart ausgebildet ist, dass der zweite Fluidstrom (39) mit einer unterschallschnellen bis höchstens schallschnellen, insbesondere schallschnellen, zweiten Fluidströmungsgeschwindigkeit (v2) injizierbar ist.

4. Zündgerät (20, 120) nach einem der voranstehenden Ansprüche, **dadurch gekennzeichnet, dass** die Fluidstrominjektionsvorrichtung (22, 122) derart ausgebildet ist, dass der erste Fluidstrom (38) und der zweite Fluidstrom (39) relativ zueinander koaxial injizierbar sind.

5. Zündgerät (20, 120) nach Anspruch 4, **dadurch gekennzeichnet, dass** der erste Fluidstrom (38) den zweiten Fluidstrom (39) in dessen Umfangsrichtung betrachtet wenigstens teilweise, insbesondere vollständig, umgibt.

6. Zündgerät (20, 120) nach einem der voranstehenden Ansprüche, **dadurch gekennzeichnet, dass** die Energieumwandlungsvorrichtung (23, 123) eine Druckschwankungserzeugungsvorrichtung (42) zum Erzeugen von Druckschwankungen aus dem wenigstens einen Fluidstrom (38, 39) aufweist.

7. Zündgerät (20, 120) nach Anspruch 6, **dadurch gekennzeichnet, dass** die Druckschwankungserzeugungsvorrichtung (42) innerhalb der Zündkammer (60) derart angeordnet ist, so dass die Druckschwankungserzeugungsvorrichtung (42) mit dem wenigstens einen Fluidstrom (38, 39) beaufschlagbar ist.

8. Zündgerät (20, 120) nach einem der voranstehenden Ansprüche, **dadurch gekennzeichnet, dass** die Druckschwankungserzeugungsvorrichtung (42) einen Druckschwankungserzeugungshohlraum (45) mit einer Druckschwankungserzeugungsöffnung (46) umfasst, wobei die Druckschwankungserzeugungsöffnung (46) der Fluidinjektionsvorrichtung (22) derart zugewandt ist, dass der Druckschwankungserzeugungshohlraum (45) mit dem wenigstens einen Fluidstrom (38, 39) beaufschlagbar ist.

9. Zündgerät (20, 120) nach Anspruch 8, **dadurch gekennzeichnet, dass** der Druckschwankungserzeugungshohlraum (45) ausgebildet ist, die Druckschwankungen auf das Ende zu fokussieren, das der Druckschwankungserzeugungsöffnung (46) entfernt liegt.

10. Zündgerät (20, 120) nach einem der voranstehenden Ansprüche, **dadurch gekennzeichnet, dass** die Energieumwandlungsvorrichtung (23, 123) eine Wärmetransportverringerungseinrichtung (50) umfasst, die ausgebildet ist, einen Wärmetransport der von der Energieumwandlungsvorrichtung (23, 123) erzeugten Wärme weg von der Energieumwandlungsvorrichtung (23, 123) zu verringern oder zu verhindern.

11. Triebwerk (11, 111), insbesondere Raketentriebwerk (111), für ein Luftfahrzeug (10) oder ein Raumfahrzeug (110), mit einer Brennkammer (15) und einem Zündgerät (20, 120) nach einem der voranstehenden Ansprüche, wobei das Zündgerät (20, 120) derart mit der Brennkammer (15) verbunden ist, dass ein in der Brennkammer (15) vorhandenes Gemisch (16) durch das Zündgerät (20, 120) entzündbar ist.

12. Luftfahrzeug (10) oder Raumfahrzeug (110) mit einem Triebwerk (11, 111) nach Anspruch 11.

13. Zündverfahren zum Entzünden eines in einer Brennkammer (15) eines Triebwerks (11, 111) vorhandenen Gemisches (16) durch Injizieren einer Mehrzahl von Fluidströmen (38, 39) in eine Zündkammer (60) in der eine Energieumwandlungsvorrichtung (23, 123) vorgesehen ist, die ausgebildet ist, Fluidstromenergie wenigstens eines Fluidstromes (38, 39) in thermische Energie umzuwandeln, um das Gemisch (16) zu entzünden, wobei ein erster Fluidstrom (38) mit einer höheren Fluidströmungsgeschwindigkeit als ein zweiter Fluidstrom (39) injiziert wird, **dadurch gekennzeichnet, dass** der erste Fluidstrom (38) mittels wenigstens einer Injektionsdüse (36) der Fluidstrominjektionsvorrichtung (22, 122) injiziert wird, wobei die Injektionsdüse (36) einen Injektionsdüsenquerschnitt (Q1) umfasst, der sich in Fluidströmungsrichtung betrachtet bis auf einen Minimalquerschnitt (Qmin) verjüngt und anschließend auf einen Austrittsquerschnitt (Qa) wieder erweitert.

## Claims

1. Ignition device (20, 120) for igniting a mixture (16), comprising
an energy conversion device (23, 123) designed for converting fluid flow energy of at least one fluid flow (38, 39) to heat in order to ignite the mixture (16) and including an ignition chamber (60) for the at least one fluid flow (38, 39), and
a fluid flow injection device (22, 122) designed for injecting a plurality of fluid flows (38, 39) into the ignition chamber (60) in such a way that a first fluid flow (38) is injectable into the ignition chamber (60) at a higher fluid flow rate than the second fluid flow,
**characterized in that** the fluid flow injection device (22, 122) comprises at least one injection nozzle (36) for the first fluid flow (38), said injection nozzle (36) having an injection nozzle cross-section (Q1) which, viewed in the direction of flow, tapers down to a minimum cross-section (Qmin) and then expands again to an outlet cross-section (Qa).

2. Ignition device (20, 120) according to claim 1, **characterized in that** the fluid flow injection device (22, 122) is designed in such a way that the first fluid flow (38) is injectable at a supersonic first fluid flow rate (v1).

3. Ignition device (20, 120) according to any one of the preceding claims, **characterized in that** the fluid flow injection device (22, 122) is designed in such a way that the second fluid flow (39) is injectable at a supersonic to at most sonic, in particular sonic, second fluid flow rate (v2).

4. Ignition device (20, 120) according to any one of the preceding claims, **characterized in that** the fluid flow injection device (22, 122) is designed in such a way that the first fluid flow (38) and the second fluid flow (39) are coaxially injectable relative to each other.

5. Ignition device (20, 120) according to claim 4, **characterized in that** the first fluid flow (38) surrounds the second fluid flow (39) at least partially, in particularly completely, when viewed in its circumferential direction.

6. Ignition device (20, 120) according to any one of the preceding claims, **characterized in that** the energy conversion device (23, 123) includes a pressure fluctuation generating device (42) for generating pressure fluctuations from the at least one fluid flow (38, 39).

7. Ignition device (20, 120) according to claim 6, **characterized in that** the pressure fluctuation generating device (42) is arranged inside the ignition chamber (60) in such a way that the at least fluid flow (38, 39) can be applied to the pressure fluctuation generating device (42).

8. Ignition device (20, 120) according to any one of the preceding claims, **characterized in that** the pressure fluctuation generating device (42) comprises a pressure fluctuation generation cavity (45) having a pressure fluctuation generation opening (46), the pressure fluctuation generation opening (46) of the fluid injection device (22) facing the fluid injection device (22) in such a way that the at least one fluid flow (38, 39) can be applied to the pressure fluctuation generation cavity (38, 39).

9. Ignition device (20, 120) according to claim 8, **characterized in that** the pressure fluctuation generation cavity (45) is designed to focus the pressure fluctuation on the end remote from the pressure fluctuation generation opening (46).

10. Ignition device (20, 120) according to any one of the preceding claims, **characterized in that** the energy conversion device (23, 123) comprises a heat transfer reduction device (50) adapted to reduce or prevent a heat transfer of heat generated by the energy conversion device (23, 123) away from the energy conversion device (23, 123).

11. Engine (11, 111), in particular rocket engine (111), for an aircraft (10) or spacecraft (110), comprising a combustion chamber (15) and an ignition device (20, 120) according to any of the preceding claims, wherein the ignition device (20, 120) is connected to the combustion chamber (15) in such a way that a mixture (16) present in the combustion chamber (15) can be ignited by the ignition device (20, 120).

12. Aircraft (10) or spacecraft (110) comprising an engine (11, 111) according to claim 11.

13. Ignition method for igniting a mixture (16) present inside a combustion chamber (15) of an engine (11, 111) by injecting a plurality of fluid flows (38, 39) into an ignition chamber (60) in which an energy conversion device (23, 123) is provided which is adapted to convert fluid flow energy of at least one fluid flow (38, 39) to thermal energy to ignite the mixture (16), wherein a first fluid flow (38) is injected at a higher fluid flow rate than a second fluid flow (39), **characterized in that** the first fluid flow (38) is injected by means of at least one injection nozzle (36) of the fluid flow injection device (22, 122), said injection nozzle (36) having an injection nozzle cross-section (Q1) which, viewed in the direction of flow, tapers down to a minimum cross-section (Qmin) and then expands again to an outlet cross-section (Qa).

## Revendications

1. Appareil d'allumage (20, 120) pour l'allumage d'un mélange (16),
comprenant
un dispositif de conversion d'énergie (23, 123) conçu pour convertir l'énergie de courant de fluide d'au moins un courant de fluide (38, 39) en chaleur afin d'allumer le mélange (16) et comprenant une chambre d'allumage (60) pour ledit au moins un courant de fluide (38, 39), et
un dispositif d'injection de courant de fluide (22, 122) conçu pour injecter une pluralité de courant de fluide (38, 39) dans la chambre d'allumage (60) de telle sorte qu'un premier courant de fluide (38) soit injectable dans la chambre d'allumage (60) à un débit de fluide plus élevé que le second courant de fluide,
**caractérisé en ce que** le dispositif d'injection de courant de fluide (22, 122) comprend au moins une buse d'injection (36) pour le premier courant de fluide (38), ladite buse d'injection (36) ayant une section transversale de buse d'injection (Q1) qui, vue dans le sens de l'écoulement du fluide, se rétrécit jusqu'à une section transversale minimale (Qmin) et s'élargit ensuite à nouveau jusqu'à une section transversale de sortie (Qa).

2. Appareil d'allumage (20, 120) selon la revendication 1, **caractérisé en ce que** le dispositif d'injection de courant de fluide (22, 122) est conçu de telle manière que le premier courant de fluide (38) peut être injecté à un premier débit de fluide supersonique (v1).

3. Appareil d'allumage (20, 120) selon l'une quelconque des revendications précédentes, **caractérisé en ce que** le dispositif d'injection de courant de fluide (22, 122) est conçu de telle manière que le deuxième courant de fluide (39) est injectable à un deuxième débit de fluide (v2) supersonique jusqu'à sonique au maximum, en particulier sonique.

4. Appareil d'allumage (20, 120) selon l'une quelconque des revendications précédentes, **caractérisé en ce que** le dispositif d'injection de courant de fluide (22, 122) est conçu de telle manière que le premier courant de fluide (38) et le second courant de fluide (39) sont injectables coaxialement l'un par rapport à l'autre.

5. Appareil d'allumage (20, 120) selon la revendication 4, **caractérisé en ce que** le premier courant de fluide (38) entoure le deuxième courant de fluide (39) au moins partiellement, en particulier complètement, vu dans sa direction circonférentielle.

6. Appareil d'allumage (20, 120) selon l'une quelconque des revendications précédentes, **caractérisé en ce que** le dispositif de conversion d'énergie (23, 123) comprend un dispositif de génération de fluctuations de pression (42) pour générer des fluctuations de pression à partir dudit au moins un courant de fluide (38, 39).

7. Appareil d'allumage (20, 120) selon la revendication 6, **caractérisé en ce que** le dispositif de génération de fluctuations de pression (42) est disposé à l'intérieur de la chambre d'allumage (60) de telle manière que ledit au moins un courant de fluide (38, 39) puisse être appliqué au dispositif de génération de fluctuations de pression (42).

8. Appareil d'allumage (20, 120) selon l'une quelconque des revendications précédentes, **caractérisé en ce que** le dispositif de génération de fluctuation de pression (42) comprend une cavité de génération de fluctuation de pression (45) ayant une ouverture de génération de fluctuation de pression (46), l'ouverture de génération de fluctuation de pression (46) du dispositif d'injection de fluide (22) étant tournée vers le dispositif d'injection de fluide (22) de telle manière que ledit au moins un écoulement de fluide (38, 39) puisse être appliqué à la cavité de génération de fluctuation de pression (38, 39).

9. Appareil d'allumage (20, 120) selon la revendication 8, **caractérisé en ce que** la cavité de génération de fluctuation de pression (45) est conçue pour concentrer la fluctuation de pression sur l'extrémité éloignée de l'ouverture de génération de fluctuation de pression (46).

10. Appareil d'allumage (20, 120) selon l'une quelconque des revendications précédentes, **caractérisé en ce que** le dispositif de conversion d'énergie (23, 123) comprend un dispositif de réduction du transfert de chaleur (50) adapté pour réduire ou empêcher un transfert de chaleur de la chaleur générée par le dispositif de conversion d'énergie (23, 123) loin du dispositif de conversion d'énergie (23, 123).

11. Moteur (11, 111), en particulier moteur-fusée (111), pour un aéronef (10) ou un véhicule spatial (110), comprenant une chambre de combustion (15) et un appareil d'allumage (20, 120) selon l'une des revendications précédentes, dans lequel l'appareil d'allumage (20, 120) est relié à la chambre de combustion (15) de telle manière qu'un mélange (16) présent dans la chambre de combustion (15) peut être allumé par l'appareil d'allumage (20, 120).

12. Aéronef (10) ou véhicule spatial (110) comprenant un moteur (11, 111) selon la revendication 11.

13. Procédé d'allumage pour allumer un mélange (16) présent à l'intérieur d'une chambre de combustion (15) d'un moteur (11, 111) en injectant une pluralité de courants de fluide (38, 39) dans une chambre d'allumage (60) dans laquelle est prévu un dispositif de conversion d'énergie (23, 123) qui est adapté pour convertir l'énergie de courant de fluide d'au moins un courant de fluide (38, 39) en énergie thermique pour allumer le mélange (16), dans lequel un premier courant de fluide (38) est injecté avec un débit de fluide plus élevé qu'un deuxième courant de fluide (39), **caractérisé en ce que** le premier courant de fluide (38) est injecté au moyen d'au moins une buse d'injection (36) du dispositif d'injection de courant de fluide (22, 122), ladite buse d'injection (36) ayant une section transversale de buse d'injection (Q1) qui, vue dans le sens de l'écoulement, se rétrécit jusqu'à une section transversale minimale (Qmin) et s'élargit ensuite à nouveau jusqu'à une section transversale de sortie (Qa).
